# EUROPEAN PATENT APPLICATION

(11) **EP 2 624 047 A2**
(43) Date of publication of application: **07.08.2013**
(21) Application number: 13152528.9
(22) Date of filing: 24.01.2013
(51) Int. Cl.: G02F 1/1337

(54) **Display Device And Method For Fabricating The Same**

(30) Priority: 31.01.2012 TW 101103027; 22.03.2012 TW 101109793
(71) Applicant: InnoLux Corporation, Chu-Nan, Miao-Li 350 (TW)
(72) Inventor: Yang, Rong-Ching, 350 Chu-Nan 350, Miao-Li County (TW); Huang, Wei-Chuan, 350 Chu-Nan 350, Miao-Li County (TW); Chen, Han-Chang, 350 Chu-Nan 350, Miao-Li County (TW); Liao, Shih-Fang, 350 Chu-Nan 350, Miao-Li County (TW); Shen, Hung-Ming, 350 Chu-Nan 350, Miao-Li County (TW); Huang, Wan-ling, 350 No. 160 Kesyue Rd., Chu-Nan Site, Hsinchu Science Park (TW); Yang, Kai-Neng, 350 Chu-Nan 350, Miao-Li County (TW); Hsieh, Tsau-Hua, 350, Chu-Nan 350, Miao-Li County (TW)
(74) Representative: 2K Patentanwälte Blasberg Kewitz & Reichel

(57) **Abstract**

A display device employing a liquid crystal module and a method for fabricating the display device are provided. The liquid crystal module includes a first substrate and a second substrate, wherein the first substrate is disposed opposite to the second substrate; a first photo-alignment layer disposed on a top surface of the first substrate, and a second photo-alignment layer disposed on a bottom surface of the second substrate, wherein the first and second photo-alignment layers include a plurality of protrusions, and wherein the protrusions are formed by polymerizing non-polar monomers having two or three acrylate functional groups; and a liquid crystal layer disposed between the first and second photo-alignment layers.

## Description

### CROSS REFERENCE TO RELATED APPLICATIONS

This application is based upon and claims the benefit of priority from the prior Taiwan Patent Application No. 101103027, filed on Jan. 31, 2012, and the prior Taiwan Patent Application No. 101109793, filed on Mar. 22, 2012, the entire contents of which are incorporated herein by reference.

### BACKGROUND

### Technical Field

The present invention relates to a display device, and in particular to a display device having a liquid crystal module.

### Description of the Related Art

A liquid crystal display device is now being widely used attributed to its characteristics such as slim profile, light weight, and low electrical power consumption. The liquid crystal display device includes a pair of substrates and a liquid crystal layer interposed therebetween. Furthermore, the liquid crystal device provides display functionality by controlling the alignment direction of liquid crystal molecules contained in the liquid crystal layer by appropriately applying a voltage to electrodes arranged on liquid crystal layer side-surfaces of the substrates. The liquid crystal display device usually includes a liquid crystal alignment film (hereinafter, simply referred to as "alignment film") for controlling the alignment direction of the liquid crystal molecules, and the alignment film is arranged on the liquid crystal layer side-surface of the substrate.

The liquid crystal alignment film is mainly made of polymer materials. The liquid crystal alignment film directs the alignment of liquid crystal molecules. When the liquid crystal molecules are moved by the influence of an electric field to display an image, the liquid crystal alignment film allows the liquid crystal molecules to be oriented in a predetermined direction. Generally, it is necessary to uniformly align the liquid crystal molecules in order to provide uniform luminance and a high contrast ratio to the liquid crystal device.

The conventional method of aligning liquid crystal molecules includes coating a polymer film such as a polyimide on a substrate made of a material such as glass, and rubbing the surface of the substrate with a fiber such as nylon or polyester in a certain direction. However, the rubbing method may cause serious problems when fabricating a liquid crystal panel due to fine dust or electrostatic discharge (ESD) that may be generated while rubbing the polymer film with the fiber.

In order to solve the problems associated with the rubbing method, a photo-radiation method has recently been researched to induce anisotropy to the polymer film by irradiating light on the membrane so as to align the liquid crystal molecules.

The conventional photo-alignment process employs a polymer material having photo-curable functional groups. The polymer material having photo-curable functional groups is irradiated by a polarized light to undergo photo-isomerization, photo-crosslinking, or photo-degradation, thereby forming a photo-alignment film yielding anisotropy on the surface thereof. Therefore, the alignment of liquid crystal molecules alignment of liquid crystal can be achieved by means of the photo-alignment film.

In order to ensure the reliability of the liquid crystal display device, suitable materials for the photo-alignment film should exhibit high photostability and thermal stability. However, since the photo-alignment film made of conventional polymer materials having photo-curable functional groups exhibits unstable alignment characteristic due to poor photostability and thermal stability, the liquid crystal display device cannot pass the production reliability test. Furthermore, the anchoring energy of alignment film fabricated by the photo-alignment process is less than that of alignment film fabricated by the rubbing-alignment process in general. Therefore, the liquid crystal display device employing the conventional photo-alignment film offers an inferior response speed and makes the generation of the image sticking more easily.

Accordingly, a novel photo-alignment process, which forms an alignment film with improved stability and anchoring ability, is desired.

### SUMMARY

An exemplary embodiment of the invention provides a display device. The display device includes a liquid crystal module, wherein the display device includes: a first substrate and a second substrate, wherein the first substrate has a top surface and the second substrate has a bottom surface, and wherein the top surface of the first substrate is disposed opposite to the bottom surface of the second substrate; a first photo-alignment layer disposed on the top surface of the first substrate, and a second photo-alignment layer disposed on the bottom surface of the second substrate, wherein the first and second photo-alignment layers comprise a plurality of protrusions, and wherein the protrusions are formed by polymerizing non-polar monomers having two or three acrylate functional groups; and a liquid crystal layer disposed between the first and second photo-alignment layers.

Another exemplary embodiment of the invention provides a method for fabricating the liquid crystal module of the display device, including: providing a first substrate and a second substrate, wherein the first substrate has a top surface and the second substrate has a bottom surface; forming a first photo-reactable compound layer on the top surface of the first substrate, and forming a second photo-reactable compound layer on the bottom surface of the second substrate; subjecting the first photo-reactable compound layer and the second photo-reactable compound layer to a first irradiation, respectively forming a first photo-alignment layer and a second photo-alignment layer; aligning and combining the first substrate with the second substrate, wherein the top surface of the first substrate is disposed opposite to the bottom surface of the second substrate; providing a liquid crystal composition into the space between the first photo-alignment layer and the second photo-alignment layer, wherein the liquid crystal composition comprises a liquid crystal and non-polar monomers having two or three acrylate functional groups; and subjecting the liquid crystal composition to a second irradiation, forming a plurality of protrusions on the surfaces of the first photo-alignment layer and the second photo-alignment layer, wherein the protrusions are formed by polymerizing the non-polar monomers.

A detailed description is given in the following embodiments with reference to the accompanying drawings.

### BRIEF DESCRIPTION OF THE DRAWINGS

The disclosure can be more fully understood by reading the subsequent detailed description and examples with references made to the accompanying drawings, wherein:

Fig. 1 shows a schematic cross section of the liquid crystal module according to an embodiment of the invention;

Fig. 2 shows a close-up diagram of region 2 of the liquid crystal module shown in Fig. 1;

Fig. 3 shows a flow chart illustrating a method for fabricating the liquid crystal module as shown in Fig. 1;

Fig. 4 shows a scanning electron microscope (SEM) photograph of the photo-alignment layer having a plurality of protrusions thereon; and

Fig. 5 schematically shows a display system including the liquid crystal module of the invention.

### DETAILED DESCRIPTION

Accordingly, the invention provides a display device including a liquid crystal module, wherein the liquid crystal module includes novel photo-alignment layers. In comparison with the convention photo-alignment layer, the photo-alignment layer of the invention has improved photostability and alignment ability. The invention also provides a method for fabricating a display device with reduced photo-alignment process time, thereby reducing cost and improving yield.

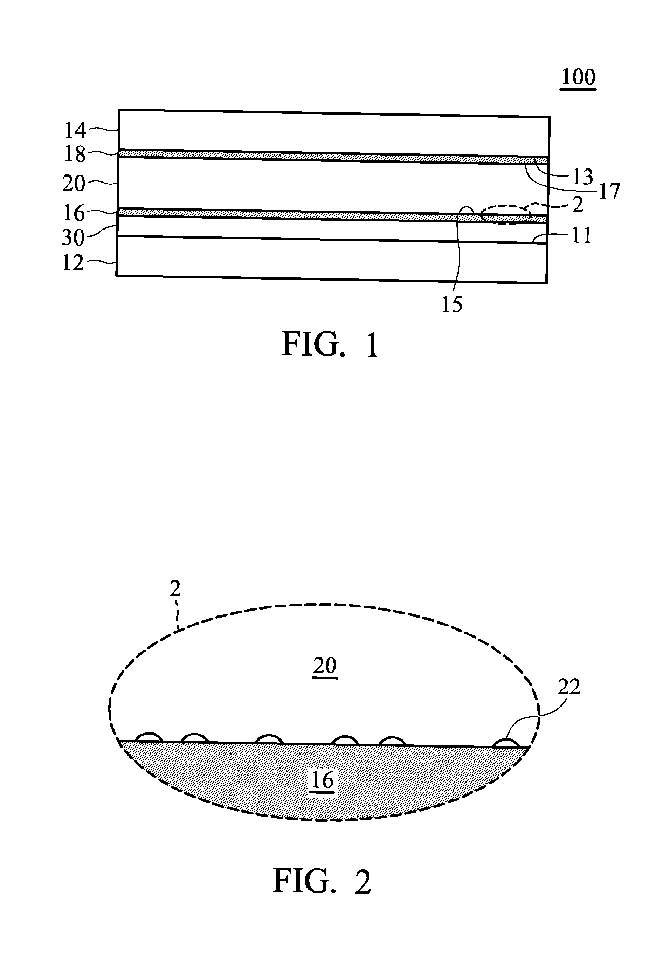

As shown in Fig. 1, an embodiment of the invention provides a liquid crystal module 100, wherein the liquid crystal module 100 includes a first substrate 12 and a second substrate 14. The first substrate 12 and second substrate 14 can be transparent substrates, such as a glass substrate. A first photo-alignment layer 16 is disposed on the top surface 11 of the first substrate 12, and a second photo-alignment layer 18 is disposed on the bottom surface 13 of the second substrate 14. The first photo-alignment layer 16 and the second photo-alignment layer 18 can be formed by subjecting a photo-degradable compound to a first irradiation, wherein the photo-degradable compound is a compound having a cyclobutane dianhydride moiety. For example, the photo-degradable compound can be a compound having a repeat unit represented by 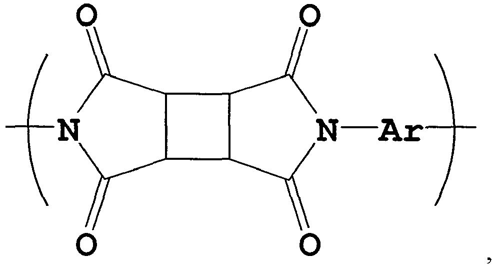 wherein Ar is an aryl group (such as phenyl group, naphthyl group, diphenyl group, anthryl group, pyrenyl group, phenanthryl group, fluorine group, or multi-phenyl group). Herein, the photo-degradable compound can be a compound having a repeat unit represented by 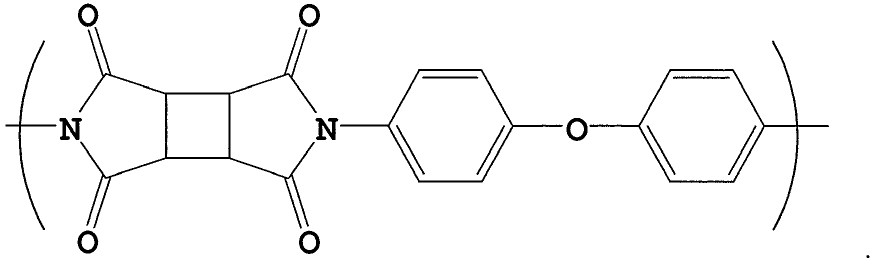 According to another embodiment of the invention, the first photo-alignment layer 16 and the second photo-alignment layer 18 can be formed by subjecting a photo-isomerizable compound to a first irradiation, wherein the photo-isomerizable compound can an azo compound. For example, the photo-isomerizable compound is an azobenzene compound, such as a compound having a structure represented by 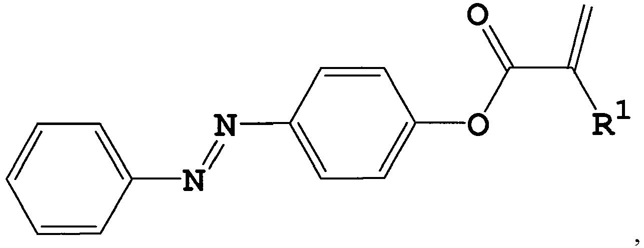 wherein R¹ is hydrogen, or C₁₋₆ alkyl.

Fig. 2 is a close-up diagram of region 2 of the liquid crystal module shown in Fig. 1. It should be noted that there are a plurality of protrusions 22 disposed on the top surface 15 of the first photo-alignment layer 16 and the bottom surface 17 of the second photo-alignment layer 18, wherein the protrusions have a height of less than or equal to 20nm and a width of less than or equal to 200nm. Particularly, the protrusions 22 are formed by polymerizing the non-polar monomers via a second irradiation, wherein the non-polar monomers can have two or three acrylate functional groups. For example, the non-polar monomers can have a structure represented by 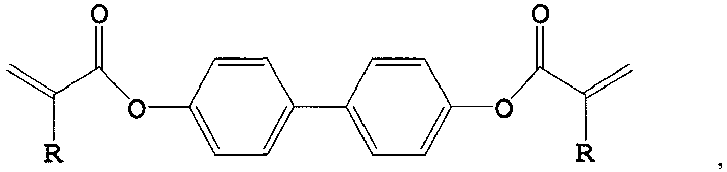 or 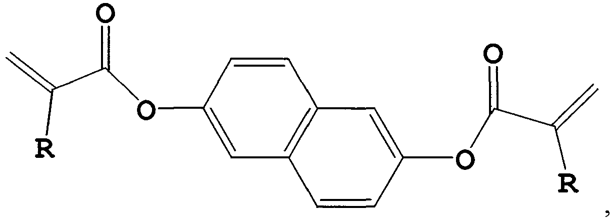 wherein R is methyl or ethyl. Furthermore, according to another embodiment of the invention, the non-polar monomers can have a structure represented by 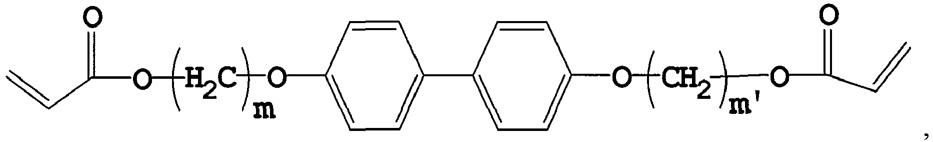 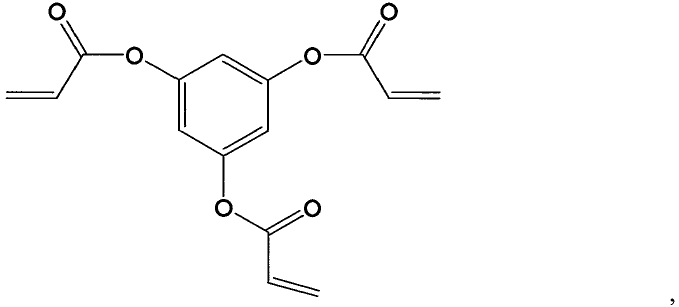 or 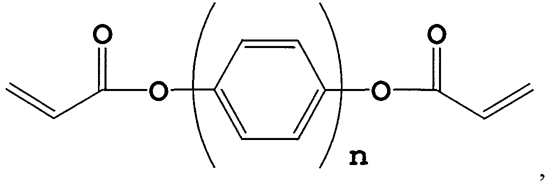 wherein m and m' are independent integers from1 to 7, and n is an integer from 1 to 5.

The protrusions 22 of the invention can increase the alignment ability of the first photo-alignment layer 16 and the second photo-alignment layer 18, thereby improving the anchoring strength between the photo-alignment film 16 (or 18) and the liquid crystal layer 20. Furthermore, the protrusions 22 of the invention can isolate the liquid crystal layer from the impurities produced in the photo-alignment process. According to some embodiments of the invention, an in-plane switching electrode 30 can be disposed on the top surface 11 of the first substrate 12. Namely, the in-plane switching electrode 30 can be disposed between the first photo-alignment layer 16 and the first substrate 12. According to another embodiment of the invention, the in-plane switching electrode 30 can be disposed between the second photo-alignment layer 18 and the second substrate 14.

Still referring to Fig. 1, a liquid crystal layer 20 is disposed on the first photo-alignment layer 16 and the second photo-alignment layer 18. According to an embodiment of the invention, the liquid crystal module can be an in-plane switching liquid crystal module.

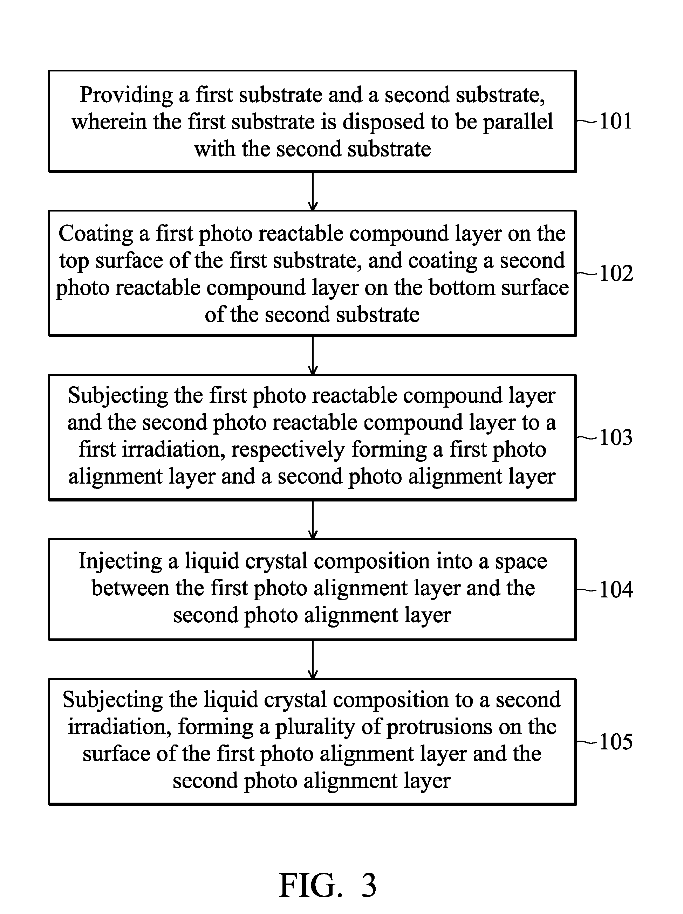

Fig. 3 is a flow chart illustrating a method for fabricating the liquid crystal module 100 as shown in Fig. 1. The method for fabricating the liquid crystal module can include the following steps:

First, a first substrate and a second substrate are provided, wherein the first substrate is disposed to be parallel with the second substrate (step 101). Next, a first photo-reactable compound layer is coated on the top surface of the first substrate, and a second photo-reactable compound layer is coated on the bottom surface of the second substrate (step 102). The photo-reactable compound can be a photo-degradable compound or a photo-isomerizable compound. The photo-degradable compound can be a compound having a cyclobutane dianhydride moiety. For example, the photo-degradable compound can be a compound having a repeat unit represented by 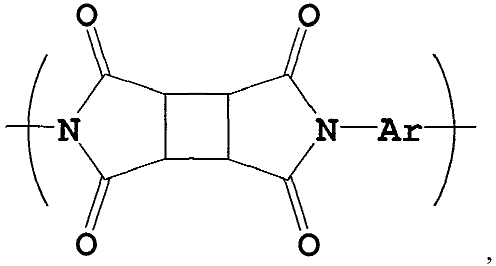 wherein Ar is an aryl group (such as phenyl group, naphthyl group, diphenyl group, anthryl group, pyrenyl group, phenanthryl group, fluorine group, or multi-phenyl group). In an embodiment, the photo-degradable compound can be a compound having a repeat unit represented by 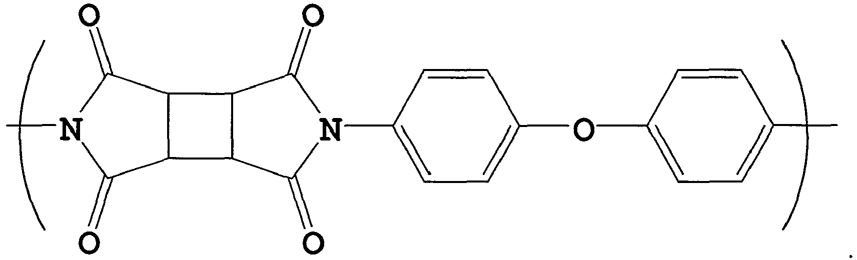 The photo-isomerizable compound can an azo compound. For example, the photo-isomerizable compound is an azobenzene compound, such as a compound having a structure represented by 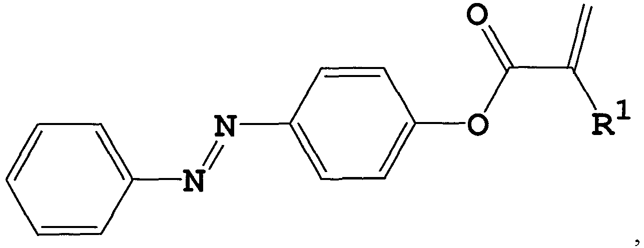 wherein R¹ is hydrogen, or C₁₋₆ alkyl.

Next, after the formation of the photo-reactable compound layer, aligning and combining the first substrate with the second substrate, wherein the top surface of the first substrate is facing and joined with the bottom surface of the second substrate, the first photo-reactable compound layer and the second photo-reactable compound layer are subjected to a first irradiation, respectively forming a first photo-alignment layer and a second photo-alignment layer (step 103). It should be noted that, if the photo-reactable compound is a photo-degradable compound, the first irradiation would be an ultraviolet light having a wavelength of 240-280nm (such as an ultraviolet light or a linear polarized light having a wavelength of 250nm). In this state, the first photo-reactable compound layer and the second photo-reactable compound layer are subjected to the first irradiation for a period of time of 1 to 100 seconds under an illuminance of 10-80 mW/cm² at a total exposure of 0.1-3J.

If the photo-reactable compound is a photo-isomerizable compound, the first irradiation would be an ultraviolet light or a linear polarized light having a wavelength of 365nm. In this case, the first photo-reactable compound layer and the second photo-reactable compound layer are subjected to the first irradiation for a period of time of 1 to 10 seconds under an illuminance of 10-80 mW/cm² at a total exposure of 0.01-0.8J.

After formation of the first photo-alignment layer and the second photo-alignment layer, a liquid crystal composition is injected into the space between the first photo-alignment layer and the second photo-alignment layer (step 104), wherein the liquid crystal composition comprises a liquid crystal and non-polar monomers having two or three acrylate functional groups. For example, the non-polar monomers can have a structure represented by 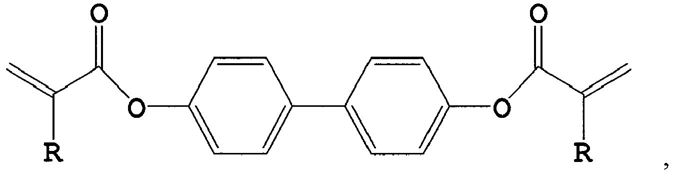 or 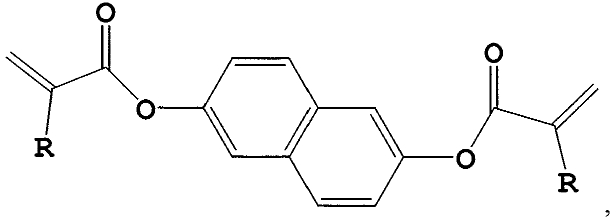 wherein R is methyl or ethyl. Furthermore, according to another embodiment of the invention, the non-polar monomers can have a structure represented by 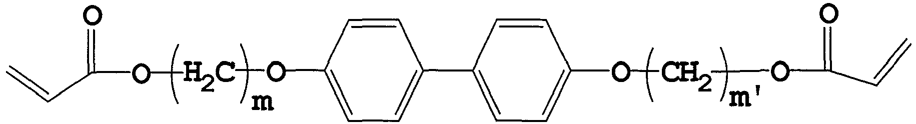 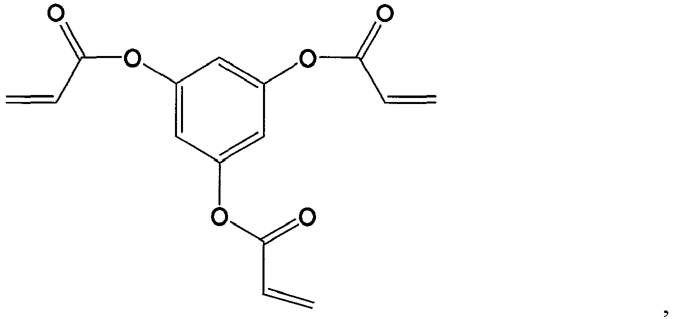 or 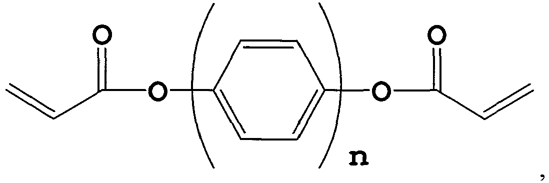 wherein m and m' are independent integers from1 to 7, and n is an integer from 1 to 5. In the liquid crystal composition, the non-polar monomer has a weight percentage of 0.05 to 3wt% (such as 0.3 wt %, 0.5 wt %, 1 wt %, 1.5 wt %, or 3 wt %), based on the weight of the liquid crystal composition.

A non-polar monomer having an overly low weight percentage (less than 0.05wt%) results the photo-alignment film having a poor alignment ability. On the other hand, a non-polar monomer having an overly high weight percentage (more than 3wt%) results in a disordered alignment of the liquid crystal.

The liquid crystal composition can be injected into the space between the first photo-alignment layer and the second photo-alignment layer by a one-drop filling process or a conventional liquid crystal injection process. Finally, after injection of the liquid crystal composition, the liquid crystal composition is subjected to a second irradiation (step 105), forcing the non-polar monomers of the liquid crystal composition to undergo polymerization and to adhere to the surfaces of the first photo-alignment layer and the second photo-alignment layer to form a plurality of protrusions. Thus, the fabrication of the liquid crystal module is completed. The second irradiation can be an ultraviolet light or a linear polarized light having a wavelength of 310 to 400nm. In this state, the first photo-reactable compound layer and the second photo-reactable compound layer are subjected to the first irradiation for a period of time of 50 seconds to 5 hours under an illuminance of 1-100mW/cm² at a total exposure of 0.5-100J.

The following examples are intended to illustrate the invention more fully without limiting its scope, since numerous modifications and variations will be apparent to those skilled in this art.

**Example 1**:

First, a first glass substrate and a second glass substrate were provided, wherein the first glass substrate was disposed to be parallel with the second glass substrate. In particular, a first photo-degradable compound layer was formed on the first glass substrate, and a second photo-degradable compound layer was formed on the second glass substrate predeterminedly, wherein the first photo-degradable compound layer was opposite to the second photo-degradable compound layer. The first photo-degradable compound layer and the second photo-degradable compound layer were made of a photo-degradable compound having a repeat unit represented by 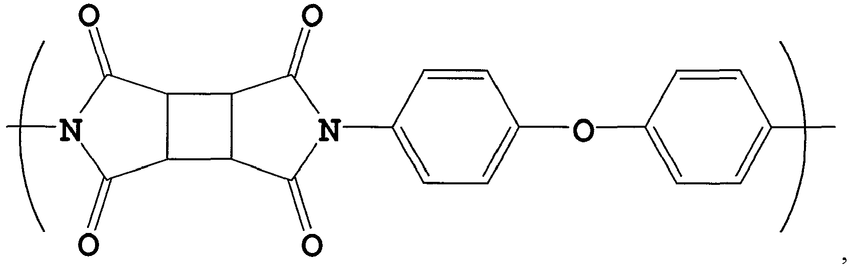 and the thickness of the first photo-degradable compound layer and the second photo-degradable compound layer can be 400-800mm. Next, the first photo-degradable compound layer and the second photo-degradable compound layer were subjected to an ultraviolet light having a wavelength of 240 to 280nm, forming a first photo-alignment layer and a second photo-alignment layer respectively. In this state, the first photo-degradable compound layer and the second photo-degradable compound layer are subjected to the first irradiation for a period of time of 1 to 100 seconds under an illuminance of 10-80 mW/cm² at a total exposure of 0.5-3J. Next, a liquid crystal composition was injected into the space between the first photo-alignment layer and the second photo-alignment layer by a one-drop filling process, forcing the liquid crystal composition to make direct contact with the surface of the first photo-alignment layer and the second photo-alignment layer. The liquid crystal composition included a liquid crystal (sold and manufactured by Merck) and a non-polar monomer having a structure represented by 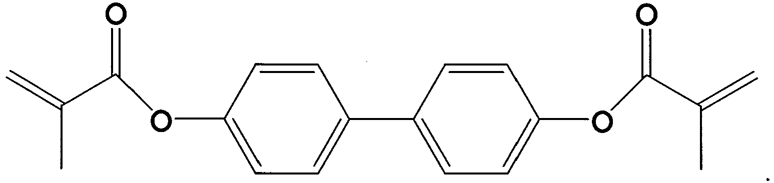 The non-polar monomer had a weight percentage of 1wt%, based on the weight of the liquid crystal composition. Finally, the liquid crystal composition was subjected to an ultraviolet light having a wavelength of 310 to 380nm for 50 second to 5 hours under an illuminance of 1-100 mW/cm² at a total exposure of 0.5-100J, forming a plurality of protrusions on the surfaces of the first photo-alignment layer and the second photo-alignment layer.

**Example 2:**

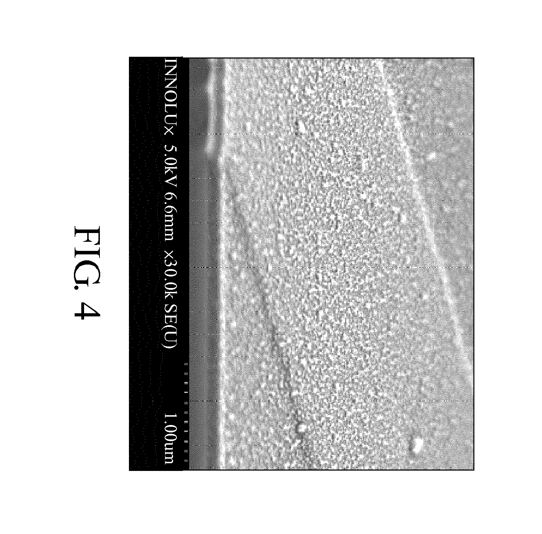

First, a first glass substrate and a second glass substrate were provided, wherein the first glass substrate was disposed to be parallel with the second glass substrate. Particularly, a first photo-isomerizable compound layer was formed on the first glass substrate, and a second photo-isomerizable compound layer was formed on the second glass substrate predeterminedly, wherein the first photo-isomerizable compound layer was opposite to the second photo-isomerizable compound layer. The first photo-isomerizable compound layer and the second photo-isomerizable compound layer were made of a photo-isomerizable compound having a structure represented by 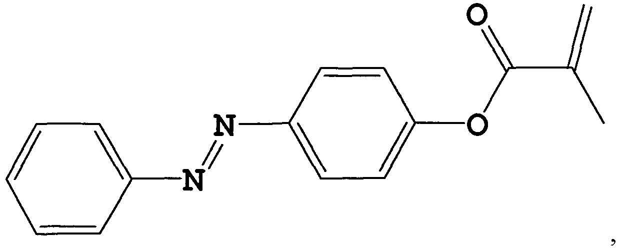 and the thickness of the first photo-degradable compound layer and the second photo-degradable compound layer can be 400-800mm. Next, the first photo-degradable compound layer and the second photo-degradable compound layer were subjected to an ultraviolet light having a wavelength of 365nm, forming a first photo-alignment layer and a second photo-alignment layer respectively. In this state, the first photo-isomerizable compound layer and the second photo-isomerizable compound layer are subjected to the first irradiation for a period of time of 10 to 500 seconds under an illuminance of 10-80 mW/cm² at a total exposure of 0.8-5J. Next, a liquid crystal composition was injected into the space between the first photo-alignment layer and the second photo-alignment layer by a one-drop filling process, forcing the liquid crystal composition to make direct contact with the surface of the first photo-alignment layer and the second photo-alignment layer. The liquid crystal composition included a liquid crystal (sold and manufactured by Merck) and a non-polar monomer having a structure represented by 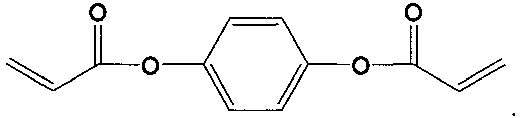 The non-polar monomer had a weight percentage of 0.3wt%, based on the weight of the liquid crystal composition. Finally, the liquid crystal composition was subjected to an ultraviolet light having a wavelength of 310 to 400nm for 100 to 1800 seconds under an illuminance of 5-10 mW/cm² at a total exposure of 0.5-18J, forming a plurality of protrusions on the surfaces of the first photo-alignment layer and the second photo-alignment layer. Fig. 4 is a scanning electron microscope (SEM) photograph of the photo-alignment layer having a plurality of protrusions thereon.

Accordingly, due to the specific photo-reactable compound and the protrusions formed on the surface of the protrusions, the alignment film of the liquid crystal module of the invention exhibits improved photostability and alignment ability. Since the protrusions can increase the anchoring strength between the photo-alignment film and the liquid crystal layer, the period of time for irradiating the photo-reactable compound layer with an ultraviolet light can be reduced. Furthermore, the protrusions of the invention can isolate the liquid crystal layer from the impurities produced in the photo-alignment process.

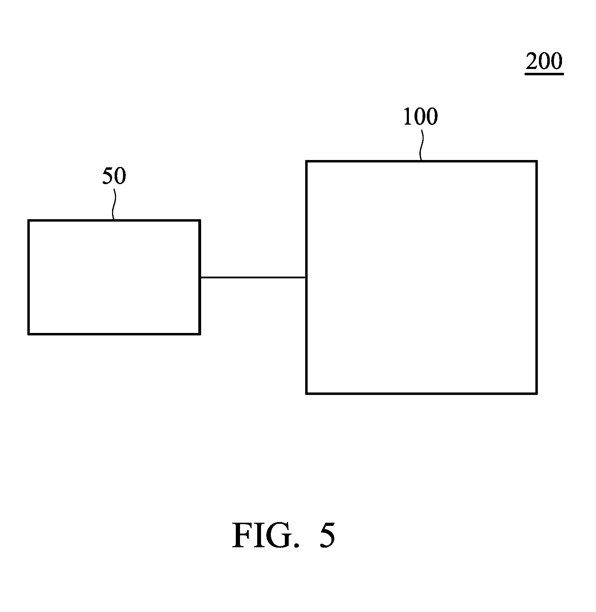

Referring to Fig. 5, a display system 200 for displaying images including the liquid crystal module 100 according to an embodiment of the invention is shown. The display system 200 can be an electrical device such as notebook computer, mobile phone, digital camera, personal data assistant (PDA), desktop computer, television, car display, or portable DVD player. The liquid crystal module 100 of the display system 200 can be further coupled to an input unit 50. The input unit 50 is operative to provide input to the liquid crystal module 100, such that the liquid crystal module 100 displays images.

While the disclosure has been described by way of example and in terms of the preferred embodiments, it is to be understood that the disclosure is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A display device, comprising:
a liquid crystal module, comprising:
a first substrate and a second substrate, wherein the first substrate has a top surface and the second substrate has a bottom surface, and wherein the top surface of the first substrate is disposed opposite to the bottom surface of the second substrate;
a first photo-alignment layer disposed on the top surface of the first substrate, and a second photo-alignment layer disposed on the bottom surface of the second substrate, wherein the first and second photo-alignment layers comprise a plurality of protrusions, and wherein the protrusions are formed by polymerizing non-polar monomers having two or three acrylate functional groups; and
a liquid crystal layer disposed between the first and second photo-alignment layers.

2. The display device as claimed in claim 1, wherein the non-polar monomers have a structure represented by 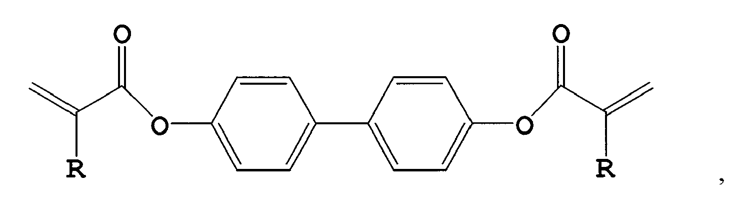 or 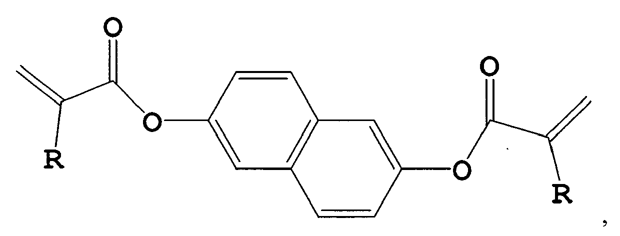 wherein R is methyl or ethyl.

3. The display device as claimed in claim 1, wherein the non-polar monomers have a structure represented by 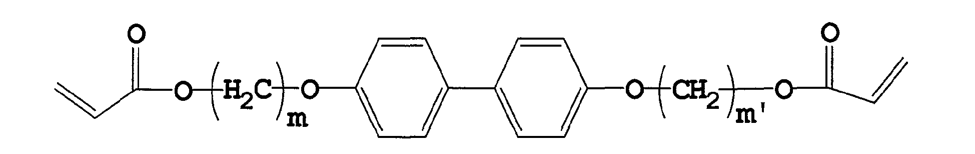 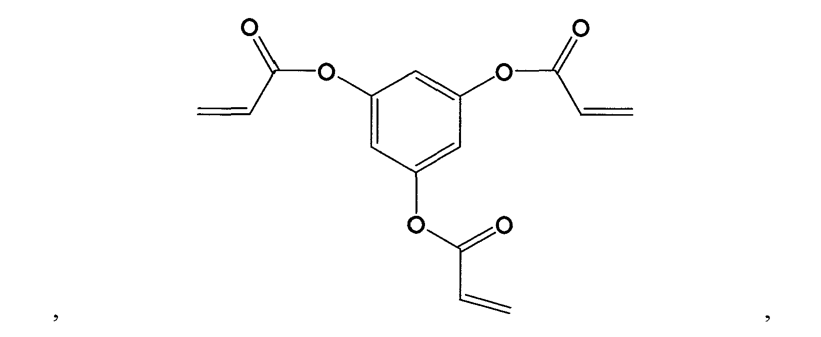 or 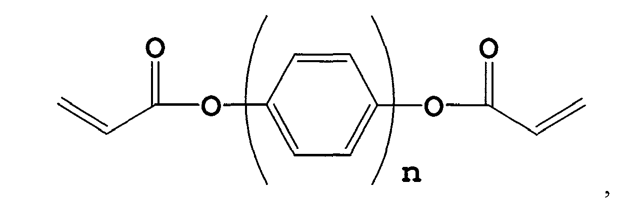 wherein m and m' are independent integers from 1 to 7, and n is an integer from 1 to 5.

4. The display device as claimed in any of the preceding claims, wherein the first photo-alignment layer and the second photo-alignment layer are formed by subjecting a photo-degradable compound to a first irradiation.

5. The display device as claimed in claim 4, wherein the photo-degradable compound is a compound having a repeat unit
represented by 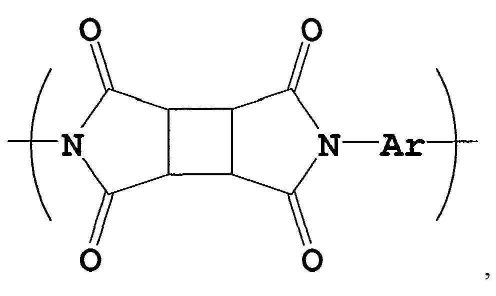 wherein Ar is an aryl group, or
wherein the photo-degradable compound is a compound having a repeat unit represented by

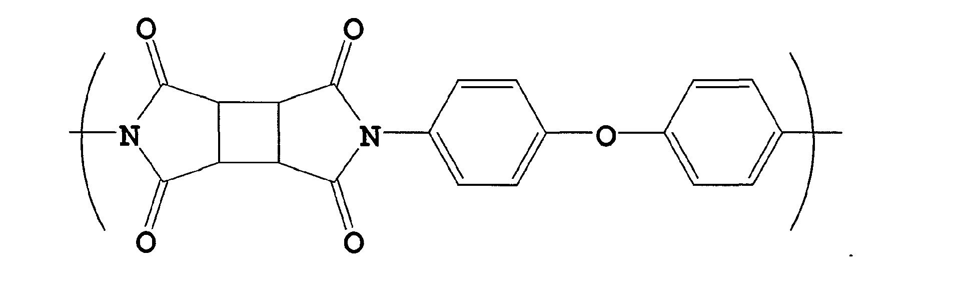

6. The display device as claimed in any of claims 1 to 3, wherein the first photo-alignment layer and the second photo-alignment layer are formed by subjecting a photo-isomerizable compound to a first irradiation.

7. The display device as claimed in claim 6, wherein the photo-isomerizable compound is a compound having a structure represented by 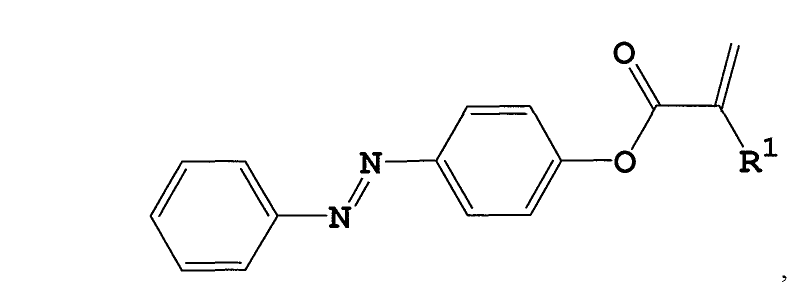 wherein R¹ is hydrogen, or C₁₋₆ alkyl.

8. The display device as claimed in any of the preceding claims, wherein the protrusions are formed by subjecting the non-polar monomers to a second irradiation and the protrusions have a height of less than or equal to 20nm and a width of less than or equal to 200nm.

9. The display device as claimed in any of the preceding claims, wherein the liquid crystal module is an in-plane switching liquid crystal module and is further comprising an in-plane switching electrode disposed on the top surface of the first substrate and disposed on the bottom surface of the second substrate.

10. A method for fabricating a display device, in particular a display device according to any of the preceding claims, comprising:
providing a first substrate and a second substrate, wherein the first substrate has a top surface and the second substrate has a bottom surface;
forming a first photo-reactable compound layer on the top surface of the first substrate, and forming a second photo-reactable compound layer on the bottom surface of the second substrate;
subjecting the first photo-reactable compound layer and the second photo-reactable compound layer to a first irradiation, respectively forming a first photo-alignment layer and a second photo-alignment layer;
aligning and combining the first substrate with the second substrate, wherein the top surface of the first substrate is disposed opposite to the bottom surface of the second substrate;
providing a liquid crystal composition into the space between the first photo-alignment layer and the second photo-alignment layer, wherein the liquid crystal composition comprises a liquid crystal and non-polar monomers having two or three acrylate functional groups; and
subjecting the liquid crystal composition to a second irradiation, forming a plurality of protrusions on the surfaces of the first photo-alignment layer and the second photo-alignment layer, wherein the protrusions are formed by polymerizing the non-polar monomers.

11. The method as claimed in claim 10, wherein the first photo-reactable compound layer and the second photo-reactable compound layer comprise a photo-degradable compound.

12. The method as claimed in claim 11,
wherein the photo-degradable compound is a compound having a repeat unit represented by 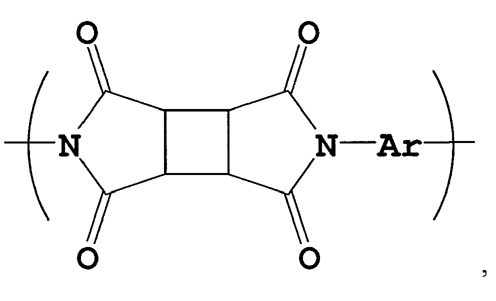 wherein Ar is an aryl group, or
wherein the photo-degradable compound is a compound having a repeat unit represented by

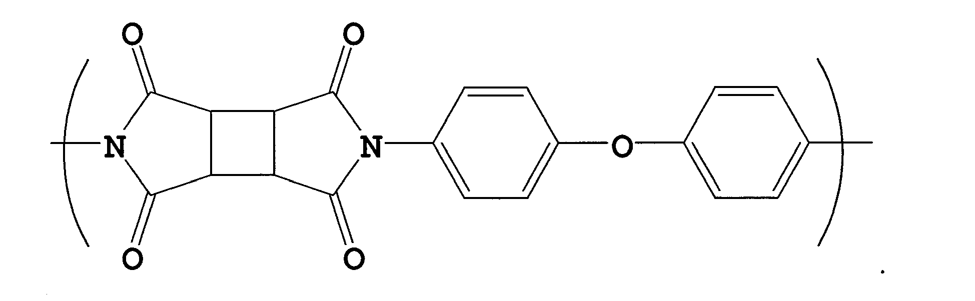

13. The method as claimed in claim 11 or 12, wherein the first irradiation is an ultraviolet light having a wavelength of 240-280nm and the first photo-reactable compound layer and the second photo-reactable compound layer are subjected to the first irradiation for a period of time of 1 to 100 seconds.

14. The method as claimed in any of claims 10 to 13, wherein the first photo-reactable compound layer and the second photo-reactable compound layer comprise a photo-isomerizable compound.

15. The method as claimed in claim 14, wherein the photo-isomerizable compound is a compound having a structure represented by 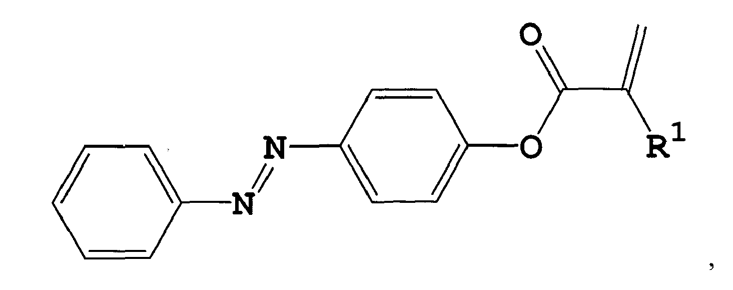 wherein R¹ is hydrogen, or C₁₋₆ alkyl.

16. The method as claimed in claim 14 or 15, wherein the first irradiation is an ultraviolet light having a wavelength of 365nm and the first photo-reactable compound layer and the second photo-reactable compound layer are subjected to the first irradiation for a period of time of 1 to 10 seconds.

17. The method as claimed in any of claims 10 to 16, wherein the weight percentage of the non-polar monomers is from 0.05 to 3wt%, based on the weight of the liquid crystal composition.

18. The method as claimed in claim 14, wherein the second irradiation is an ultraviolet light having a wavelength of 310-400nm and the liquid crystal composition is subjected to a second irradiation for a period of time of 50 second to 5 hours.
